# EUROPÄISCHE PATENTSCHRIFT

(11) **EP 1 229 181 B1**
(45) Veröffentlichungstag und Bekanntmachung des Hinweises auf die Patenterteilung: **26.10.2005**
(21) Anmeldenummer: 01102155.7
(22) Anmeldetag: 02.02.2001
(51) Int. Cl.: E04F 15/04, B27G 11/00, C09J 5/00, C09J 5/04

(54) **Bauteil sowie Verfahren zur Herstellung eines solchen Bauteils**
Building component and method to produce such a building component
Elément constitutif et procédé pour produire un tel élément constitutif

(43) Veröffentlichungstag der Anmeldung: 07.08.2002
(73) Patentinhaber: Fritz Egger GmbH & Co, 3105 Unterradlberg (AT)
(72) Erfinder: Steinwender, Martin, 2380 Perchtoldsdorf (AT)
(74) Vertreter: Cohausz & Florack

(56) Entgegenhaltungen:
- DE-A- 4 324 743
- DE-U- 29 703 962
- FR-A- 2 675 078
- GB-A- 2 133 374

## Beschreibung

Die Erfindung betrifft ein Bauteil mit einer Fügefläche sowie ein Verfahren zum Herstellen eines Bauteils mit einer Fügefläche. Insbesondere betrifft die Erfindung ein Bauteil mit einer Fügefläche, auf der eine Matrix mit einem Klebstoffsystem aufgebracht ist, das seine die Fügefläche mit einer weiteren Fügefläche verbindende Wirkung erst beim Fügen zweier Bauteile entfaltet. Das Aufbringen des Klebers kann dabei auch zeitlich beabstandet vom Zusammenfügen der Bauteile erfolgen, z.B. bei der industriellen Herstellung des Bauteils.

Unter Bauteile sind allgemein Werkstücke zu verstehen, die im Zuge ihrer weiteren Verarbeitung mit anderen Werkstücken zu einer Gesamtheit vereinigt werden sollen. Die miteinander zu fügenden Werkstücke können von einheitlicher Dimension, Beschaffenheit und auch aus denselben Werkstoffen bestehen, können sich aber auch grundsätzlich in allen möglichen Bereichen unterscheiden. Insbesondere, aber nicht ausschließlich betrifft die Erfindung Bauteile, von denen mindestens ein Bauteil aus einem zellulosehaltigen Material besteht.

Für das Fügen von Bauteilen sind verschiedene Techniken wie Nageln, Dübeln, Schrauben, formschlüssiges Verbinden, z.B. Schwalbenschanz-Verbindung, Einrasten, z.B. leimlose Verlegesysteme für Fußbodenbeläge, und Kleben bekannte Technologien.

Das Kleben bietet viele Vorteile gegenüber rein mechanisch wirkenden Verbindungselementen. Einerseits erlaubt die flächige Verbindung der Bauteile eine gute Übertragung von Kräften von einem Bauteil auf ein anderes. Ebenso kann, wenn gewünscht bzw. erforderlich, aufgrund des vollständigen Ausfüllens der Verbindungsfuge durch den Kleber eine geschlossene Fuge ausgebildet werden, die z.B. das Eindringen von Fremdstoffen wie z.B. Staub, Wasser und dergleichen während der Montagephase und im Zuge der Benutzung verhindert. Des weiteren kann durch Kleben im Gegensatz zum Nageln und Schrauben eine Verbindung erfolgen, die äußerlich keine Verbindungsmittel erkennen lässt und dadurch optisch nicht erkennbar ist. Dies ist vor allem für Fußbodenbeläge und für Möbel von großer Wichtigkeit.

Das Aufbringen von Kleber im Zuge des Fügens der Bauteile während der Montage ist in der Regel sehr zeitaufwändig und erfordert fachliche Kenntnis über Werkstoffeigenschaften und geeignete Klebesysteme bzw. Geschick des Ausführenden, um das gewünschte Ergebnis zu erreichen. Probleme können dabei z.B. die offene Zeit des Klebers sein, also die maximale Zeit, die zwischen Aufstreichen des Klebers und Fügen der Teile verstreichen darf, um eine ausreichende Klebeverbindung zu erhalten. Weitere Probleme stellen die Beschaffenheit des Klebers selbst, da bei zu geringer Viskosität ein Abtropfen des Klebers auftreten kann, und der erhöhte Montageaufwand bedingt durch das Aufbringen des Klebers dar.

Für Laminatfußböden beispielsweise wird empfohlen, deutlich mehr Kleber aufzubringen als erforderlich. Der Kleber soll nach dem Fügen der Nut-Feder-Verbindung auf der gesamten Länge der Fügestrecke herausquellen, um ein vollständiges Abdichten der Klebefuge zu erreichen. Der überschüssige Kleber muss dann aufwändig entfernt werden, um ein optisch einwandfreies Resultat zu erzielen.

Aus dem Stand der Technik der DE 297 03 962 U1 ist ein Fußboden- oder Wandbelag bekannt, bei dem die Fügeflächen als Nut-Feder-Profil ausgebildet sind, die mit einem Kontaktklebstoff beschichtet sind. Dieser kann bereits werkseitig aufgebracht worden sein, so dass beim Fügen der Bauteile entlang der Fügeflächen eine Klebeverbindung entsteht. Ein Kontaktklebstoff ist ein Klebstoff, der als Lösung auf die zu verklebenden Fügeflächen aufgebracht wird und der erst nach weitgehendem Verdunsten des Lösungsmittels, also wenn die Klebstofffilme scheinbar trocken sind, unter möglichst großer Druckeinwirkung zusammengefügt wird. Die zusammengefügten Klebstofffilme bilden dann im wesentlichen unter Verdampfen restlicher Lösungsmittel eine Klebstoffschicht mit hoher Festigkeit aus. Die Klebewirkung beruht dabei auf den physikalisch wirkenden Adhäsionskräften. Problematisch bei den im Stand der Technik verwendeten Kontaktklebstoffen ist die permanent vorhandene latente Klebewirkung durch die Adhäsionskräfte. Da auch einseitig wirkende Kontaktklebstoffschichten bei einem Andrücken an beliebige Gegenstände zu einer Klebewirkung führen, müssen die so vorbehandelten Bauteile vor jeglichem Andrücken an andere Gegenstände gesichert werden, bevor diese mit anderen Bauteilen zusammengefügt werden. Dieses gilt insbesondere auch für ein Anliegen an Verpackungsmaterial.

Die FR-A-2 675 078 offenbart eine Verbindung zwischen zwei Bauteilen, wobei auf Fügeflächen, die im verbundenen Zustand aneinander anliegen, eine Matrix mit Kapseln aufgebracht ist, in denen ein Stoff eines Reaktionsklebstoffs enthalten ist. Dabei ist eine Vielzahl von Kapseln in der Matrix verteilt. Aus der GB-A 2 133 374 sind Mikrokapseln bekannt, in denen eine Komponente eines Reaktionsklebstoffs eingeschlossen ist und die in einer Matrix eingebettet auf einer Fügefläche eines Bauteils angeordnet ist.

Der Erfindung liegt daher das technische Problem zugrunde, einerseits auf die Vorteile einer Klebeverbindung im Vergleich zu mechanischen Fügesystemen nicht zu verzichten, gleichzeitig aber den bauseitigen Aufwand und den Aufwand der Handhabung der Bauteile nicht zu erhöhen.

Das zuvor aufgezeigte technische Problem wird gemäß einer ersten Lehre der Erfindung durch ein Bauteil mit den Merkmalen des Anspruches 1 gelöst. Weitere Merkmale sind in den davon abhängigen Unteransprüchen beschrieben. Erfindungsgemäß ist ein mehrlagiger Aufbau von Matrix und Kapseln gewählt worden.

Die vorliegende Erfindung kann insbesondere bei beliebigen Bauteilen angewendet werden. Exemplarisch werden zwei besondere Anwendungen angegeben, ohne jedoch die Erfindung darauf zu beschränken.

Die Bauteile können Möbelteile sein, aus denen ein Möbelstück zusammengefügt wird. Dabei kommt es insbesondere auf ein Verbinden von Bauteilen aus unterschiedlichen Werkstoffen an. Beispielsweise werden Bauteile aus Holz bzw. einem Holzwerkstoff mit metallischen oder aus Kunststoff bestehenden Beschlägen oder mit Schrauben verbunden. Werden die Beschläge oder Schrauben mit den aus Holz oder einem Holzwerkstoff bestehenden Bauteilen verbunden, so tritt eine gegenseitige Fixierung der Bauteile untereinander ein, die ein langdauerndes festes Verbinden der Möbelteile miteinander ermöglicht.

Ganz allgemein können die Bauteile aus gleichen oder unterschiedlichen Materialien bestehen. Dabei kommt es nicht auf die Art des jeweiligen Materials an, es können Kunststoffe, Metalle und natürliche Materialien zum Einsatz kommen.

In bevorzugter Weise besteht dabei jeweils mindestens ein Bauteil zumindest teilweise aus einem zellulosehaltigen Material, beispielsweise aus einem zumindest teilweise aus einjährig nachwachsenden Pflanzen wie Gras oder Stroh bestehenden Material, das vorzugsweise verpresst und/oder mit einem Bindemittel versehen ist. Insbesondere kann das Material auch zumindest teilweise aus einem lignozellulosehaltigen Material bestehen, wie Holz oder einem Holzwerkstoff.

Erfindungsgemäß wird für das dauerhafte Verbinden der Bauteile ein Reaktionsklebstoffsystem eingesetzt. Reaktionsklebstoffe sind Klebstoffe, die über chemische Reaktionen, bspw. Polyreaktionen oder Vernetzung von zwei oder mehr Klebstoffkomponenten, die durch Wärme, zugesetzte Härter oder andere Komponenten bzw. durch Strahlung ausgelöst werden können, aushärten und abbinden. Die sich daraus ergebenden Verklebungen sind sehr fest und dauerhaft.

Die an der Reaktion teilnehmenden Stoffe sind zum einen die Klebstoffkomponenten selbst, die nach Abschluß der chemischen Reaktion Teil der ausgehärteten Klebstoffschicht sind. Zu diesen Klebstoffkomponenten gehören auch die sogenannten Härter. Zum anderen sind die Stoffe Reaktionsbeschleuniger und/oder Koinitiatoren. Unter Koinitiator versteht man eine Komponente, die den Härter bzw. den Beschleuniger erst beim Vorliegen von bestimmten Bedingungen, z.B. Temperatur, pH-Wert, Strahlungsenergie oder Feuchtigkeit, seine Wirkung entfalten lässt.

Beispielsweise sind Reaktionsklebstoffsysteme auf Isocyanatbasis, auf Epoxybasis, auf Basis ungesättigter Systeme ebenso geeignet wie sulfidische Systeme, Kleber auf Siloxanbasis und säurehärtende Systeme. Grundsätzlich können aber alle Systeme verwendet werden, die zumindest zwei Komponenten für die chemische Härtungsreaktion benötigen. Härtungsreaktionen können durch Radikalbildner wie Peroxide, Azoverbindungen, Redox-Systeme, Strahlung (UV und sichtbares Licht) oder durch Säurebildner erreicht werden. Ebenso sind auch einkomponentige Klebstoffsysteme möglich. Die Härtung erfolgt dann in Kombination mit Feuchtigkeit, wie bspw. bei Einkomponenten-Isocyanatsystemen.

Weiter erfindungsgemäß ist das Reaktionsklebstoffsystem gekapselt ausgeführt, wobei zumindest einer der an der chemischen Reaktion teilnehmenden Stoffe in gekapselter Form, also in Kapseln eingebracht ist. Somit kann eine Klebstoffkomponente, ein Härter, ein Beschleuniger und/oder ein Koinitiator in den Kapseln enthalten sein.

Unter Kapseln versteht man die Umhüllung eines Stofftröpfchens. Eine Vielzahl von so erhaltenen Kapseln sind in einer Matrix dispergiert. Die Umhüllung der Kapsel muss zum einen so ausgestaltet sein, dass der darin enthaltene Stoff einerseits den Auftragungsprozess und die Lagerung bis zum Fügen der Teile ohne ungewollte Veränderung übersteht und zudem eine Verträglichkeit mit der Matrix vorhanden ist. Andererseits muss eine Aktivierung der Härtungsreaktion im Zuge des Fügens möglich sein. Das wird dadurch erreicht, dass die Kapselhülle aufgebrochen wird, wodurch sich der nun freiliegende Stoff des Klebstoffsystems partiell oder vollständig auf der Fügeoberfläche befindet und mit mindestens einem weiteren Stoffe bzw. Klebstoffkomponente des reaktiven Klebstoffsystems eine chemische Reaktion eingeht bzw. die chemische Reaktion beschleunigt oder initiiert. Erst dadurch wird als Folge des Zusammenfügens die Verklebung der beiden Bauteile bewirkt.

Das Aufbrechen der Kapseln kann z.B. durch die Einwirkung von mechanischen Kräften, also beispielsweise durch Druck oder Reibung erfolgen. Für das Aktivieren des Reaktionsklebstoffs sind neben einer Druck- oder Reibungskrafteinwirkung aber auch alle anderen Techniken, die ein Aufbrechen der Kapseln bewirken, geeignet. Das Aufbrechen der Kapseln kann durch die Verwendung von Hilfsmitteln wie z.B. durch das Auftragen einer die Kapsel auflösenden Flüssigkeit, wie z.B. Wasser durch Sprühen, Streichen, Rollen oder ähnliches, durch die Einwirkung von Ultraschallenergie, Hochfrequenzenergie, Wärmeenergie z.B. Infrarot-Strahlung oder die Einwirkung von UV-Strahlung erfolgen.

Das reaktive Klebstoffsystem selbst kann aus einer einzigen Komponente, die mit Wasser als zweiter Komponente reagiert, oder auch aus zwei oder mehreren Komponenten bzw. Stoffen bestehen. Teile der Matrix oder die gesamte Matrix selbst können auch Komponenten bzw. Stoffe des Klebstoffsystems sein.

Das Aufbringen bei einem reaktiven Klebstoffsystem aus mehreren Komponenten kann derart erfolgen, dass auf einer Fügeoberfläche die eine Komponente als gekapseltes System aufgebracht wird und dass die andere Komponente in analoger Weise auf der anderen Fügeoberfläche plaziert wird. Im Zuge des Fügens werden die Kapseln in einer der zuvor beschrieben Vorgehensweisen zum Aufbrechen gebracht, wodurch die beiden Komponenten miteinander in Kontakt und in Mischung gebracht werden. Ein rasches Härten des Klebers ist die Folge.

Die Matrix, in der die Kapseln dispergiert sind, hat primär die Aufgabe, die Kapseln auf der Oberfläche der Fügeflächen so nachhaltig zu verankern, dass sie bis zum Zeitpunkt des Zusammenfügens der Bauteile dort verbleiben. Die Matrix besteht dazu entweder aus einem Klebstoff, insbesondere einem Schmelzklebstoff, oder aus einem Wachs oder Harz.

Daneben kann die Matrix auch zusätzliche Aufgaben übernehmen, bspw. eine Versiegelung der Fügeoberfläche, insbesondere als Schutz vor dem Eindringen von Feuchtigkeit, eine Verfestigung der Fügeoberfläche oder die Funktion eines Haftvermittlers, wenn die gekapselte Klebstoffkomponente Haftungsprobleme mit der Fügeoberfläche aufweist.

Die Matrix kann aber auch selbst zumindest teilweise Stoff des Klebstoffsystems sein. In diesem Fall beinhalten die Kapseln jenen Stoff bzw. jene Stoffe, die dazu führen, dass der in der Matrix enthaltene Stoff des Klebstoffsystems mit diesen gemeinsam zur chemischen Reaktion mit nachfolgender Härtung gebracht wird.

Das Aufbringen des gekapselten Klebstoffsystems kann entweder nur auf einer Fügefläche oder auf beiden Fügeflächen erfolgen. Ein einseitiges Aufbringen ist dann unumgänglich, wenn nur eines der beiden Bauteile für eine vorherige Bearbeitung zugänglich ist.

Vor allem im Hinblick auf die Verwendung der zuvor beschriebenen gekapselten Klebstoffsysteme für Laminatfußböden ergeben sich erhebliche Produktvorteile. Bisher gibt es prinzipiell zwei Arten von Verbindungsmöglichkeiten. Bei der einen erfolgt die Fügung der einzelnen Paneelen mittels eines Klebers, in der Regel einem PVAc-Kleber, sprich einem Weißleim. Bei der anderen erfolgt eine mechanische Kupplung bzw. Verriegelung der Paneelen, bei der eine zusätzliche Verklebung aber ebenso möglich ist. Die Verwendung des Weißleimes erfordert jedoch einen hohen Zeitaufwand für die Montage. Der Leim wird händisch aufgetragen und muss beim Fügen der Teile oberflächlich herausquellen. Erst nach erfolgter Trocknung wird der überstehende Leim abgereinigt.

Der Vorteil der Verleimung der Paneelen gegenüber mechanischen Verriegelungssystemen liegt im Erhalt einer geschlossenen Oberfläche, die dem Eindringen von Wasser sehr gut vorbeugt. Der Vorteil der mechanischen Verriegelung liegt in einer raschen Verlegung. Eine bevorzugte Ausgestaltung der vorliegenden Erfindung ermöglicht nun beide Vorteile zu kombinieren, ohne den Aufwand in der Behandlung vor einem Zusammenfügen der Bauteile zu erhöhen. Zum einen kann wie bei Weißleim eine geschlossene, fugenfreie Oberfläche erhalten werden, zum anderen ist eine rasche Verlegung wie bei mechanisch verriegelnden Verlegesystemen möglich.

Gemäß einer zweiten Lehre der vorliegenden Erfindung wird das oben aufgezeigte Problem auch durch ein Verfahren zum Herstellen eines Bauteils mit einer Vielzahl von mindestens einen Stoff eines reaktiven Klebstoffsystems beinhaltenden Kapseln auf einer Fügefläche mit den Merkmalen des Anspruches 17 gelöst. Weitere Merkmale sind in den Unteransprüchen enthalten.

Bei diesem Verfahren wird mit Hilfe eines Auftragssystems mindestens eine Matrixschicht aufgebracht, die zumindest teilweise Matrixmaterial und zumindest teilweise Kapseln aufweist, und bei dem die so erhaltene Matrixschicht zumindest teilweise verfestigt wird. Erfindungsgemäß wird somit eine für das Ausbilden eines reaktiven gekapselten Klebstoffsystems auf der bzw. den Fügeflächen geeignete Matrixschicht aufgebracht.

Unter Verfestigen ist dabei zu verstehen, dass die Matrixschicht eine Konsistenz aufweist, dass diese formstabil ist und weitgehend inhärent gegenüber Anhaften an Verpackungen und anderen Oberflächen ist. Dieses wird insbesondere dann durchgeführt, wenn es die nachfolgenden Bearbeitungsschritte erfordern, z.B. Verpacken, Zwischenstapeln etc.. Die Auftragstechnik muss zudem an die bspw. plane oder sphärisch geformte Form der mit Kapseln zu bestückenden Fügefläche angepasst werden.

Es gibt verschiedene bevorzugte Ausgestaltungen des erfindungsgemäßen Verfahrens, die im folgenden beschrieben werden.

Bei einer ersten bevorzugten Ausgestaltung des erfindungsgemäßen Verfahrens werden zunächst die Kapseln vor dem Auftragen in dem Matrixmaterial dispergiert. Mit Hilfe des Auftragssystems wird dann mindestens eine Matrixschicht aus Matrixmaterial auf zumindest einen Teil der Fügefläche aufgetragen, die dann in im wesentlichen gleichmäßiger Verteilung die Kapseln enthält. Danach wird die so erhaltene Matrixschicht zumindest teilweise verfestigt.

Bei einer zweiten bevorzugten Ausgestaltung des erfindungsgemäßen Verfahrens wird mit Hilfe des Auftragssystems mindestens eine Matrixschicht aus Matrixmaterial auf zumindest einen Teil der Fügefläche aufgetragen. Besondere Rücksicht auf geringe äußere Krafteinwirkung muss dabei wegen des Fehlens der Kapseln nicht genommen werden. Die noch nicht vollständig verfestigte, insbesondere noch feuchte Matrixschicht weist leicht klebende Eigenschaften auf. Auf diese werden in einem zweiten Schritt die Kapseln aufgebracht, die vorzugsweise als feines Pulver vorliegen. Nachfolgend wird die so erhaltene Matrixschicht zumindest teilweise verfestigt.

Bei beiden zuvor beschriebenen erfindungsgemäßen Verfahren besteht das Matrixmaterial zumindest teilweise aus einem gelösten Klebstoff, der nach dem Auftragen zumindest teilweise durch eine Trocknung verfestigt wird. Das Antrocknen kann dabei mit bekannten Trocknungstechnologien erfolgen, z.B. Heißluft, Infrarot-Strahlung, Hochfrequenz, Mikrowelle erfolgen.

Bei einer dritten bevorzugten Ausgestaltung des vorliegenden erfindungsgemäßen Verfahrens wird mit Hilfe des Auftragssystems mindestens eine Matrixschicht aus mit Matrixmaterial zumindest teilweise ummantelten Kapseln aufgebracht, die anschließend zumindest teilweise verfestigt wird. Insbesondere besteht dabei das Matrixmaterial zumindest teilweise aus einem Schmelzkleber, der nach dem Auftragen durch Erwärmen zumindest teilweise angeschmolzen und nachfolgend durch Abkühlen wieder verfestigt wird. Dadurch wird aus der Umhüllung der Kapseln einerseits eine im wesentlichen durchgängige Matrixschicht erzeugt und andererseits kommt es durch das Anschmelzen des Schmelzklebstoffes zu einem guten Anhaften der Matrixschicht an der Fügefläche.

Bei dem erfindungsgemäßen Verfahren zum Herstellen einer Matrix mit einer Vielzahl von Kapseln auf einer Fügefläche kann das Aufbringen des Klebstoffsystems in Abhängigkeit von der Viskosität und der Stabilität der Kapseln gegenüber der Einwirkung durch äußere Kraft mit üblichen Auftragssystemen wie Sprühen, Streichen, Walzen, Spachteln, Streuen und dergleichen erfolgen.

Ein Absaugen von möglicherweise zu viel aufgebrachten Kapseln, das letztlich keine ausreichende Verankerung in der Matrix gefunden hat, kann vorteilhaft sein. Die abgesaugten Kapseln können dem Vorrat an Kapseln wieder zugeführt werden. Auch ein mehrfacher Auftrag von Kapseln, die gleichartige Stoffen und/oder andere Stoffen des Klebstoffsystems beinhalten, ist möglich.

Nach dem Auftragen der Kapseln kann der Auftrag einer weiteren Matrixschicht wie zuvor.beschrieben erfolgen. Damit erreicht man eine bessere Verankerung der Kapseln auf der Oberfläche. Diese Schicht kann z.B. mit den Matrixkomponenten der ersten Schicht identisch oder auch aus anderen Stoffen zusammengesetzt sein. Ein anschließendes Verfestigen, wie es zuvor beschrieben wurde, erfolgt zumindest teilweise.

Die Erfindung wird im folgenden anhand von Ausführungsbeispielen näher erläutert, wozu auf die beigefügte Zeichnung Bezug genommen wird. In der Zeichnung zeigen
- Fig. 1: ein erstes Ausführungsbeispiel von Bauteilen mit Fügeflächen, wobei die Bauteile voneinander beabstandet angeordnet sind,
- Fig. 2: das in Fig. 1 dargestellte Ausführungsbeispiel nach einem Zusammenfügen der Bauteile,
- Fig. 3a-d: verschiedene Ausschnitte gemäß III in Fig. 1, die verschiedene Ausgestaltungen der Matrix darstellen, wobei Fig. 3a Stand der Technik und Fig. 3b bis 3d erfindungsgemäße Ausführungsbeispiele darstellen,
- Fi.4,5: ein zweites Ausführungsbeispiel von Bauteilen mit Fügeflächen,
- Fig. 6-8: ein dritte Ausführungsbeispiel von Bauteilen mit Fügeflächen und
- Fig. 9-11: Darstellungen zur Verdeutlichung der durchgeführten Tests zur Bestimmung der Stärke der Verbindungen von erfindungsgemäßen Bauteilen.

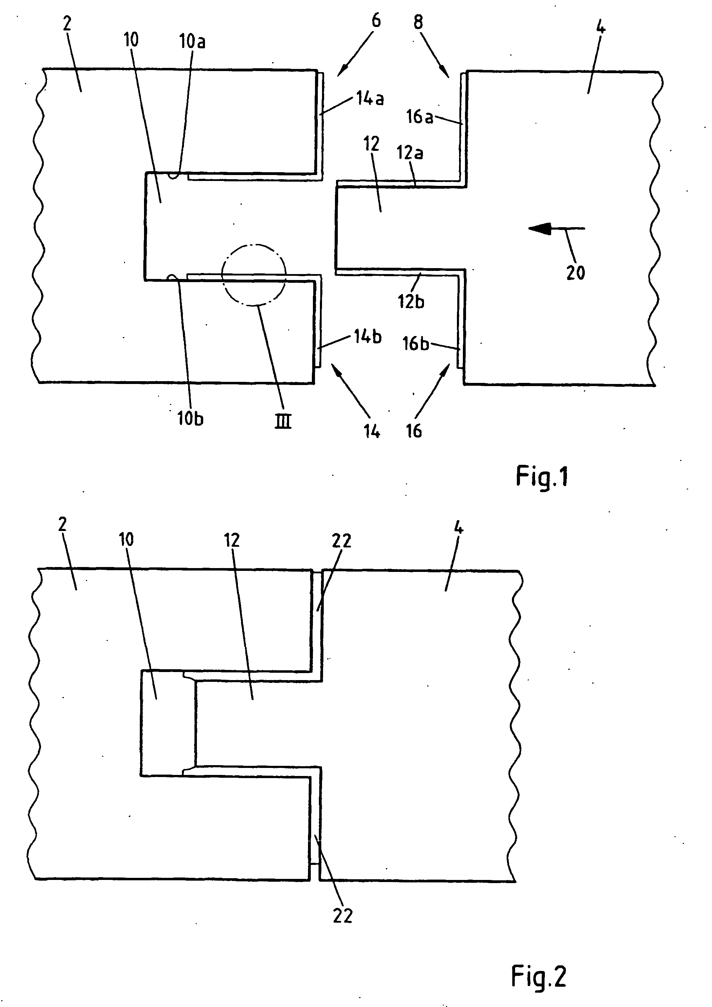

Die Fig. 1 und 2 zeigen eine erfindungsgemäße Verbindung zwischen zwei Bauteilen 2 und 4. Beide Bauteile 2 und 4 weisen zumindest abschnittsweise miteinander korrespondierende Fügeflächen 6 und 8 auf, die im verbundenen Zustand aneinander anliegen. Vorliegend sind die Fügefläche 6 mit einer Nut 10 und die Fügefläche 8 mit einer Feder 12 als Nut-Feder-Profil ausgebildet, jedoch soll darin keine Beschränkung der Erfindung verstanden werden. Wie weiter unten noch erläutert wird, kann die erfindungsgemäße Verbindung auch an beliebig geformten, also auch stumpfen Fügeflächen angewendet werden.

Auf beiden Fügeflächen 6 und 8 ist, wie Fig. 1 zeigt, eine Matrix 14 bzw. 16 abschnittsweise angeordnet. Ein erster Abschnitt 14a der Matrix 14 verläuft beim Bauteil 2 vom oberen Rand der Fügefläche 6 bis zur Oberseite 10a der Nut 10, während sich der andere Abschnitt 14b der Matrix 14 von der Unterseite 10b der Nut 10 bis zum unteren Rand der Fügefläche 6 erstreckt. Des weiteren verläuft ein erster Abschnitt 16a der Matrix 16 vom oberen Rand der Fügefläche 8 bis zur Oberseite 12a der Feder 12, während sich ein zweiter Abschnitt 16b der Matrix 16 von der Unterseite 12b der Feder 12 bis zum unteren Rand der Fügefläche 8 erstreckt.

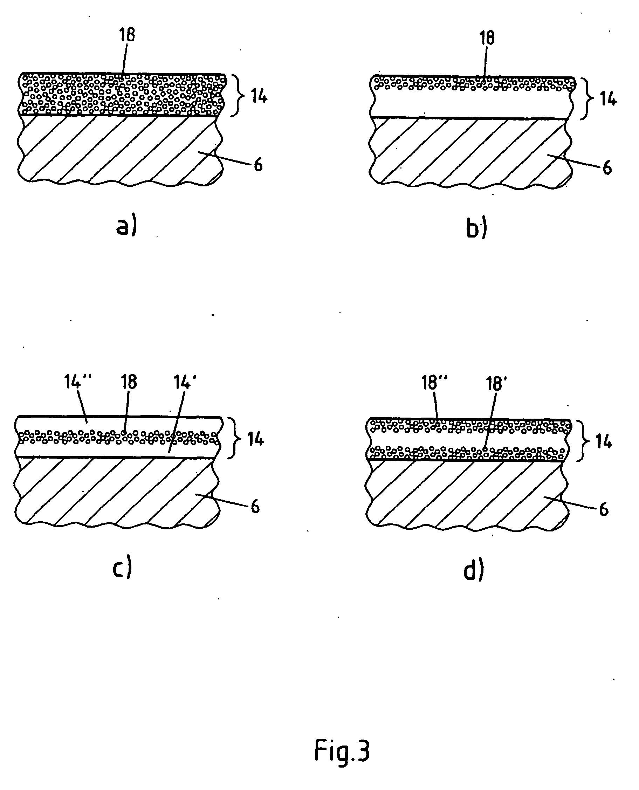

Der mit III gekennzeichneten Ausschnitt in Fig. 1 ist in den Fig. 3a bis 3d vergrößert für verschiedene Ausgestaltungen der Matrix dargestellt.

Die Fig. 3a bis 3d, die nachfolgend noch näher erläutert werden, zeigen eine Vielzahl von Kapseln 18, die in der Matrix 14 verteilt angeordnet ist. Erfindungsgemäß ist in den Kapseln 18 ein Stoff eines Reaktionsklebstoffsystems enthalten. Da die Kapseln 18 in der in Fig. 1 dargestellten Situation weitgehend geschlossen sind, bleibt der Stoff innerhalb der Matrix 14 isoliert, so dass die chemische Reaktion mit dem mindestens einen weiteren Stoff des Reaktionsklebstoffsystems vermieden wird. Es wird also ein stabiler Zustand auch über eine längere Zeitdauer aufrecht erhalten, so dass das Aufbringen der Matrix auch werkseitig erfolgen kann, wobei das Zusammenfügen der Bauteile 2 und 4 erst zu einem späteren Zeitpunkt erfolgt.

Während des Zusammenfügens, das mit dem Pfeil 20 in Fig. 1 angedeutet ist, setzen die einzelnen Kapseln 18 unter äußerer Einwirkung den in ihnen enthaltenen Stoff zumindest teilweise frei. Somit kommt es zu einer chemischen Reaktion dieses Stoffes des Klebstoffsystems mit einem anderen, in den Matrizen 14 und 16 vorhandenen Stoff des Klebstoffsystems, so dass es zu einem Aushärten kommt. In diesem Zustand ist, wie Fig. 2 darstellt, zwischen den beiden Bauteile 2 und 4 eine gemeinsame Klebstoffschicht 22 ausgebildet, die hauptsächlich aus dem ausreagierten Reaktionsklebstoff besteht.

Beim Zusammenfügen der Bauteile 2 und 4 werden die Kapseln 18 unter Krafteinwirkung durch Druck und Reibung geöffnet, um den Klebstoff zumindest teilweise freizusetzen. Daneben können die Kapseln 18 auch unter Einwirkung äußerer Energie, insbesondere Hochfrequenzenergie, Ultraschallenergie, Wärmeenergie, Lichtenergie oder UV-Energie den Stoff zumindest teilweise freisetzen. Des weiteren können die Kapseln 18 unter Einwirkung einer Flüssigkeit, insbesondere Wasser, den Stoff zumindest teilweise freisetzen.

Die Matrizen 14 und 16 bestehen aus einem Klebstoff, Harz oder Wachs, um eine ausreichende Fixierung und Stabilisierung der verteilt angeordneten Kapseln 18 zu gewährleisten. Zudem bewirken die Matrizen 14 und 16 eine Versiegelung der Fügeflächen 6 und 8, insbesondere gegenüber dem Eindringen von Feuchtigkeit vor und nach dem Fügen der Bauteile 2 und 4.

In den Fig. 3a bis 3d sind verschiedene Ausbildungen der Matrix 14 auf einem Teil der Fügefläche 6 dargestellt.

Fig. 3a zeigt eine Matrix, in der die Kapseln 18 im wesentlichen homogen verteilt angeordnet sind. Dieser Aufbau wird vor allem beim Herstellen dadurch erreicht, dass vor dem Herstellen der Matrix 14 die Kapseln bereits in dem aufzubringenden Material verteilt angeordnet sind und somit in einem Arbeitsgang die Matrix 14 auf die Fügefläche 6 aufgebracht werden kann.

Fig. 3b zeigt eine Ausgestaltung der Matrix 14, bei der die Kapseln 18 im wesentlichen im oberen Abschnitt der Matrix 14 angeordnet sind. Diese Anordnung wird beim Herstellen insbesondere dadurch erreicht, dass zunächst das Material der Matrix 14 auf die Fügefläche 6 aufgebracht wird und anschließend auf die noch nicht verfestigte Matrix 14 die Kapseln 18 aufgebracht werden. Während des anschließenden Trocknens der Matrix 14 werden dann die Kapseln in ihrer Verteilung in der obersten Schicht der Matrix 14 fixiert, so dass sich die in Fig. 3b dargestellte Verteilung ergibt.

Fig. 3c zeigt einen Aufbau der Matrix 14, bei dem die Kapseln 18 innerhalb der gesamten Matrixschicht im wesentlichen mittig angeordnet sind. Zu beiden Seiten oben und unten sind Matrixschichten 14' und 14'' ohne darin enthaltener Kapseln 18 vorgesehen. Diesen Aufbau erhält man beispielsweise dadurch, dass die Kapseln 18, wie im Zusammenhang mit Fig. 3b beschrieben, auf die erste Matrixschicht 14' aufgebracht werden, die anschließend noch mit der weiteren Matrixschicht 14'' abgedeckt werden. Die beiden Matrixschichten 14' und 14'' können gleiche oder unterschiedliche Stoffe des reaktiven Klebstoffsystems beinhalten.

Fig. 3d zeigt schließlich einen Aufbau der Matrix 14, bei dem im oberen und im unteren Abschnitt der Matrix 14 jeweils eine Schicht von Kapseln 18 angeordnet ist. Diese läßt sich durch eine Kombination der voranstehenden Verfahrensschritte herstellen.

Wie bereits ausgeführt worden ist, besteht der Reaktionsklebstoff aus mindestens zwei Komponenten, wobei die Kapseln 18 eine erste Komponente des Reaktionsklebstoffes enthalten. Für ein einfaches Reaktionsklebstoffsystem besteht die zweite Komponente aus Wasser. Daher reicht es in diesem Fall für die erfindungsgemäße Verbindung aus, dass vor dem Zusammenfügen der Bauteile eine oder beide Fügeflächen 6 und/oder 8 mit Wasser angefeuchtet oder benetzt werden. Somit kommt es dann, wenn während des Zusammenfügens die Kapseln 18 die erste Komponente freisetzen, zu der zum Aushärten des Reaktionsklebstoffes notwendigen chemischen Reaktion. Bevorzugt wird dafür der in Fig. 3b dargestellte Aufbau der Matrix 14 gewählt, damit die aus den Kapseln 18 austretende Klebstoffkomponente möglichst direkt mit dem Wasser in Berührung kommt.

Bei einer anderen Ausgestaltung weist die Matrix 14 bzw. 16 zumindest teilweise eine zweite Komponente des Reaktionsklebstoffes auf, so dass direkt innerhalb der Matrix 14 bzw. 16 die chemische Reaktion ablaufen kann. Des weiteren können die Kapseln 18 und/oder die Matrix 14 mindestens eine weitere Komponente oder ein weiterer Stoff eines Reaktionsklebstoffes aufweisen, die für die chemische Reaktion erforderlich ist. Für diese Art des Reaktionsklebstoffsystems ist vor allem der in Fig. 3a dargestellte Aufbau der Matrix 14 geeignet, da bereits vor dem Auftreten der äußeren Einwirkung eine homogene Verteilung der Kapseln 18 vorliegt. Ebenso kann eine Matrix 14 mit einem Aufbau gemäß Fig. 3c angewendet werden.

Des weiteren können mindestens zwei verschiedene Sorten von Kapseln 18', 18'' mit unterschiedlichen Komponenten bzw. Stoffen des Reaktionsklebstoffsystems vorgesehen sein. In diesem Fall setzen die verschiedenen Kapseln 18', 18'' ihre jeweiligen Komponenten bzw. Stoffe unter der äußeren Einwirkung frei, so dass dann innerhalb der Matrix 14 bzw. 16 die chemische Reaktion stattfindet. Für die Art des Klebstoffsystems eignet sich insbesondere der in Fig. 3d dargestellt Aufbau der Matrix 14. Ebenso können die Kapseln 18' und 18'' gleichmäßig verteilt in der Matrix 14 angeordnet sein, wie vergleichsweise in Fig. 3a dargestellt ist.

Wie in den Fig. 1 und 2 dargestellt ist, sind beide Fügeflächen 6 und 8 mit der die Kapseln 18 enthaltenen Matrix 14 bzw. 16 versehen.

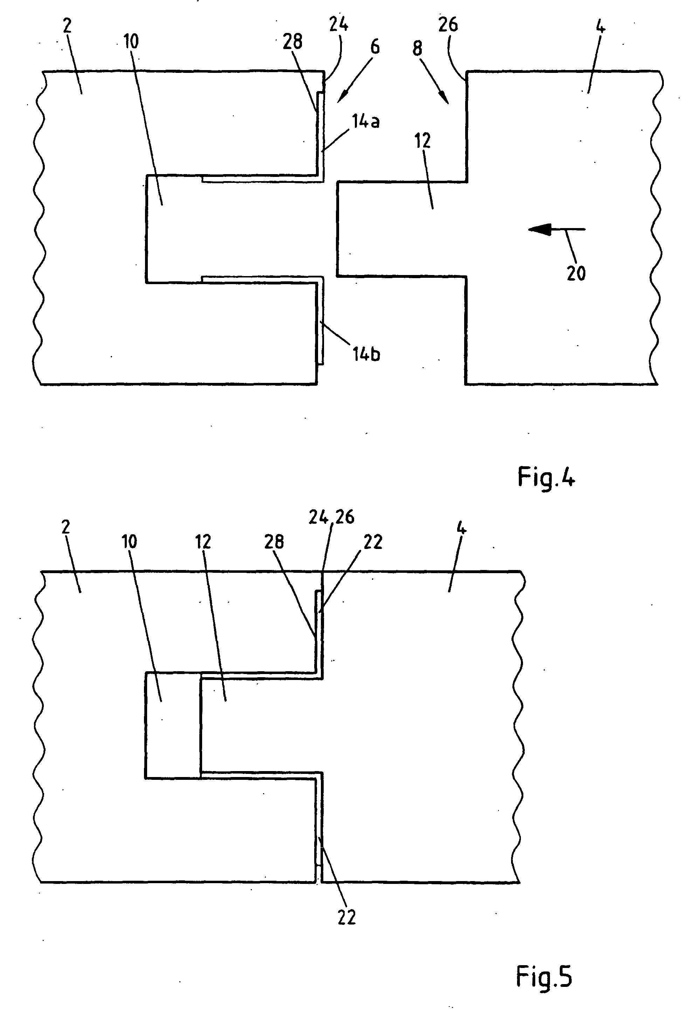

Wie die Fig. 4 und 5 zeigen, ist es im Rahmen der Erfindung ebenfalls möglich, dass nur die Fügefläche 6 mit einer Matrix 14 versehen ist. In diesem Fall wird die Fügefläche 8 erst beim Zusammenfügen mit der Matrix 14 bedeckt und es kommt zum Ausbilden einer festen Verbindung durch den Kontakt mit der Matrix 14.

Bei einer weiteren Ausgestaltung gemäß den Fig. 1 und 2 sind die Fügefläche 6 mit einer Matrix 14 mit ersten Kapseln 18' und die andere Fügefläche 8 mit einer Matrix 16 mit zweiten Kapseln 18'' versehen, wobei die ersten Kapseln 18' eine erste Komponente und die zweiten Kapseln 18'' eine zweite Komponente eines aus mindestens zwei Komponenten bestehenden Reaktionsklebstoffes enthalten. Als bevorzugter Aufbau der Matrizen 14 und 16 werden dabei der in Fig. 3b dargestellte Aufbau angewendet, damit die unterschiedlichen Kapseln 18' und 18'' beim Zusammenfügen in direkten Kontakt miteinander treten können und die chemische Reaktion schnellstmöglich ablaufen kann.

Die Fig. 4 und 5 zeigen noch einen weiteren Aspekt der vorliegenden Erfindung. Da die Matrix 14 auf die Oberfläche der Fügefläche 6 aufgetragen worden ist, trägt diese entsprechend ihrer Dicke auf, beispielsweise im Bereich von wenigen Zehntel Millimeter. Um eine gute Passung zwischen den beiden Bauteilen 2 und 4 insbesondere im Bereich der Fugenkanten 24 und 26 zu gewährleisten, ist für ein Auftragen der Matrix 14 im Bereich des oberen äußeren vertikalen Abschnittes der Fügefläche 6 eine Vertiefung 28 vorgesehen. Die aufgetragene Matrix 14 steht dann nur geringfügig vor die Fugenkante 14 in Fig. 4 nach rechts vor, so dass nach dem Zusammenfügen der beiden Bauteile 2 und 4 die Fugenkanten 24 und 26 mit Passung aneinander anliegen und eine im wesentlichen dichte Fuge bilden. Daher ist die Matrix 14 auch nicht bis zum obersten Ende der Fugenkante 24 hochgezogen. Gleichzeitig ist die Matrix 14 einem mechanischen Druck durch die Anlage an der Fügefläche 8 ausgesetzt, wodurch die chemische Reaktion in der beschriebenen Weise ausgelöst wird.

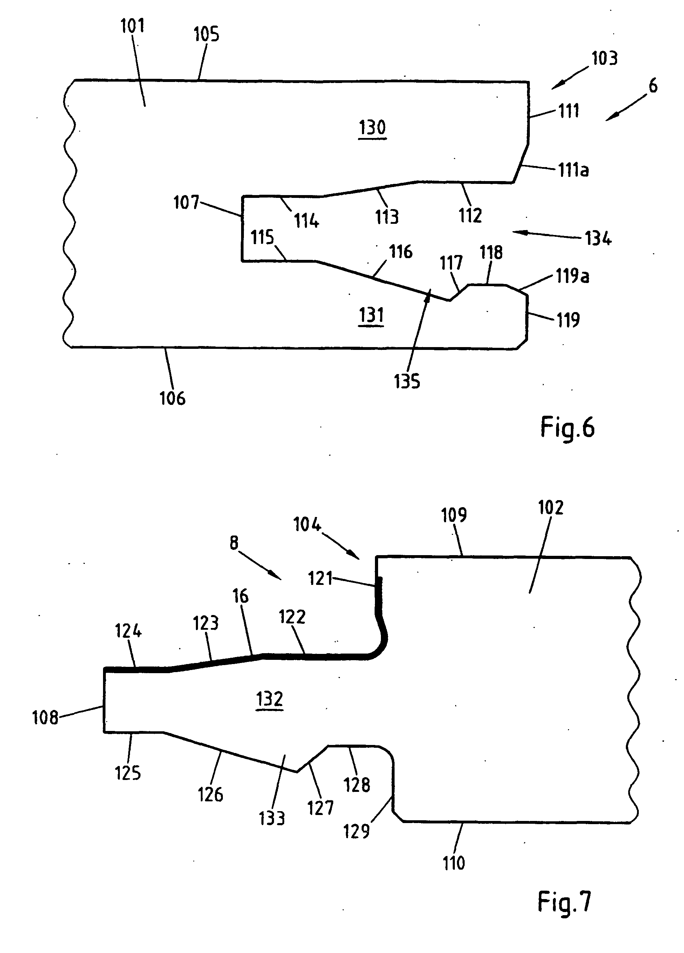

Die Fig. 6 bis 8 zeigen ein bekanntes Profil einer Nut-Feder-Verbindung für zwei Paneele 101 und 102 eines Fußbodenbelages, die mittels einer mechanischen Verriegelung miteinander gekoppelt werden können. Das Profil lässt sich wie folgt näher erläutern.

Fig. 6 zeigt eine erste Paneele 101, in deren äußere Kante 103 eine Nut 134 eingearbeitet ist. Dazu weist die Kante 103 eine Vielzahl von unterschiedlich zur Oberfläche 105 geneigte Oberflächen 111 bis 119 auf, deren Verlauf sich aus der Fig. 6 ergibt.

Fig. 7 zeigt eine zweite Paneele 2, die an einer Kante 104 eine Feder 132 aufweist, die vorzugsweise integral mit der Paneele 102 ausgebildet ist. Die Kante 104 weist eine Vielzahl von unterschiedlich zur Oberfläche 109 geneigte Oberflächen 121 bis 129 auf, deren Verlauf sich aus der Fig. 7 ergibt und im wesentlichen parallel zu den korrespondierenden Oberflächen 111 bis 119 ausgerichtet sind.

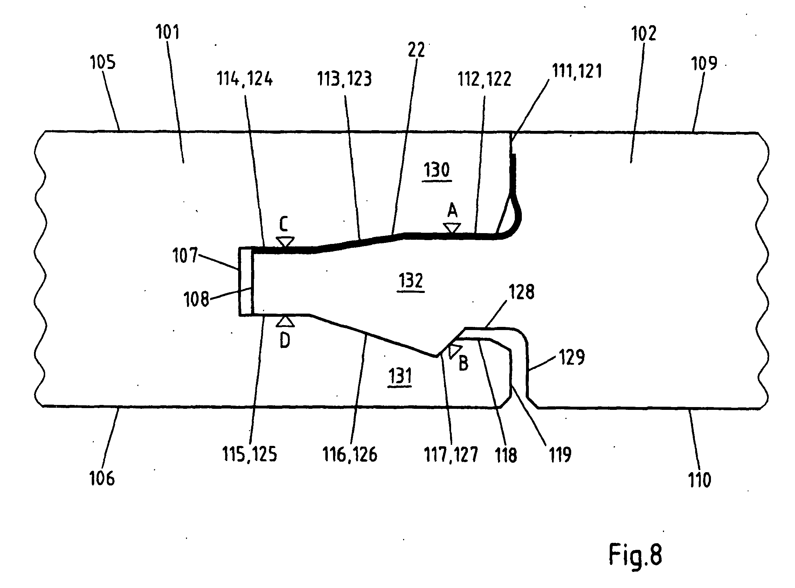

Fig. 8 zeigt die beiden Paneele 101 und 102 im mechanisch miteinander verbundenen Zustand. Dazu steht die Feder 132 der Paneele 102 mit der oberen Lippe 130 und der unteren Lippe 131 der Nut 134 der Paneele 101 in Eingriff.

Im verrasteten bzw. verriegelten Zustand liegen die Oberflächen der Nut 134 einerseits und der Feder 132 andererseits zumindest teilweise paarweise flächig aneinander an. Daraus ergeben sich zumindest die mit den offenen Dreiecken und den Großbuchstaben A, B, C und D gekennzeichneten Paare von Paßflächen 112,122; 114,124; 115,125 und 117,127. Diese bewirken sowohl eine gute Biegesteifigkeit als auch eine gute Sicherung gegen ein Auseinanderschieben der Paneele 101 und 102.

Sowohl die Paneele 101 als auch die Paneele 102 können umseitig entweder mit dem in Fig. 6 dargestellten Profil oder mit dem in Fig. 7 dargestellten Profil versehen sein, so dass eine Mehrzahl von Paneelen 101 und 102 zu einer flächigen Anordnung miteinander verbunden werden können. Dazu weisen die Paneelen 101 und 102 jeweils an einer Längs- und einer Querseite ein Profil gemäß Fig. 6 und an den anderen Seiten gemäß Fig. 7 auf.

Auch wenn das zuvor beschriebene Kantenprofil bereits eine gute Verriegelungsqualität zeigt, kann dessen dauerhafte Wirkung dadurch verstärkt werden, dass die beiden Profile gleichzeitig als Fügeflächen 6 und 8 entsprechend der vorliegenden Erfindung verstanden werden. Dazu zeigen die Fig. 7 und 8, dass die Fügefläche 8 der Paneele 102 mit einer Matrix 16 versehen ist, die einen vorgegebenen Abschnitt der Fügefläche 8 bedeckt. Um die genaue Passung der Oberflächen des Veriegelungsprofils zu gewährleisten, ist in der zuvor bereits beschriebenen Weise der mit der Matrix 16 bedeckte Abschnitt der Fügefläche 16 mit einer umlaufenden Vertiefung versehen, so dass nach dem Auftragen der Matrix 16 diese nur geringfügig über das eigentliche Verriegelungsprofil hinausragt. Beim Zusammenfügen der beiden Profile bzw. Fügeflächen 6 und 8 wird dann durch mechanische Einwirkung durch Druck und Reibung der beschrieben Effekt hervorgerufen, dass die in der Matrix 16 enthaltenen Kapseln 18 aufplatzen und den darin enthaltenen Stoff freisetzen.

Fig. 8 zeigt dann die beiden Paneele 101 und 102 im verriegelten Zustand, wobei die ausreagierte Klebstoffschicht 22 zusätzlich zur mechanischen Verriegelung eine Stabilität der Verbindung bewirkt.

Wie sich aus den Fig. 6 bis 8 ergibt, sind vorliegend bevorzugt die horizontal verlaufenden Oberflächen 122 und bzw. auch 123 des Verriegelungsprofils mit der Matrix 16 versehen. Da gerade diese Oberflächen während des Zusammenfügens der Paneele 101 und 102 mit den korrespondierenden Oberflächen aneinanderreiben, ist zuverlässig gewährleistet, dass die Kapseln 18 aufplatzen bzw. anderweitig mechanisch beschädigt werden.

Die nachfolgenden Beispiele sollen verschiedene Einsatzbereiche der erfindungsgemäßen Verbindung beschreiben. Der Bindemittelauftrag betrug zwischen 250 und 300 g/m² Naßgewicht.

### Beispiel 1:

Auf 6 mm starke Streifen aus Buchenholz (fagus silvatica) wurde ein gekapseltes Klebstoffsystem mit ca. 300 g/m² Naßgewicht aufgetragen. Das Klebstoffsystem entspricht den Eigenschaften eines peroxidisch härtenden Methacrylat-Systems.

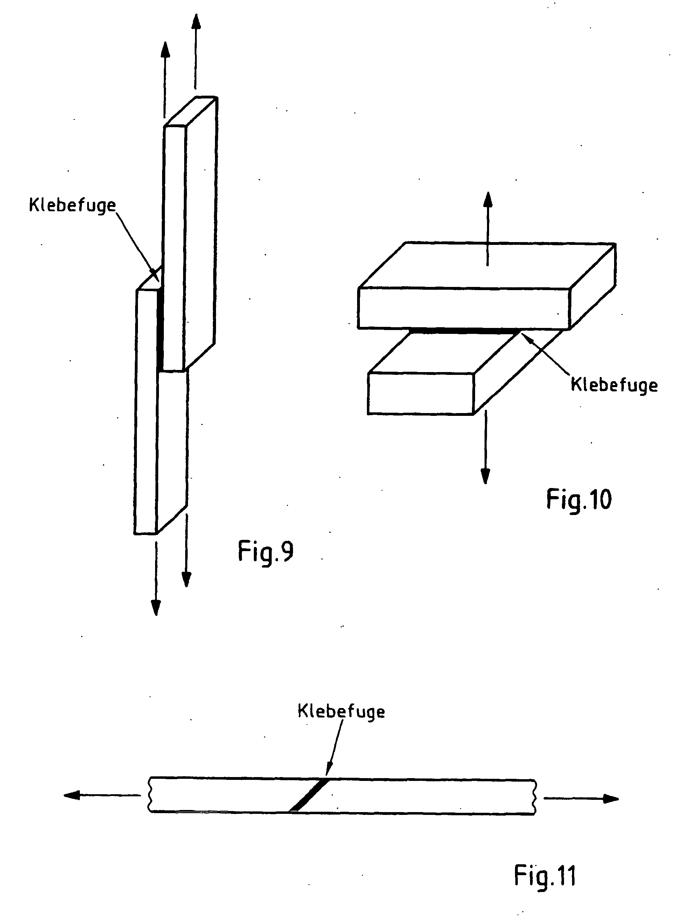

Nach dem Auftrag wurden die einzelnen Streifen mit einem Heißlufttrockner angetrocknet, bis sie grifftrocken waren. Nach einer Zwischenlagerung von mehreren Tagen wurden jeweils 2 Streifen mit einer Überlappung von 3 cm durch einfaches Übereinanderschieben der beiden Streifen zusammengefügt, siehe Fig. 9, und ohne äußere Druckeinwirkung gelagert.

Nach ca. 30 Minuten wurden jeweils 2 cm breite Streifen geschnitten und die Zugkraft (Scherkraft) parallel zur Klebefuge mit einer Universalprüfmaschine ermittelt. Vergleichsproben wurden mit einem handelsüblichen Weißleim der Klasse D3 hergestellt. Die Prüfung erfolgte nach 4 Stunden Härtungszeit.

Die Ergebnisse waren wie folgt (Mittelwert aus jeweils 10 Proben)

| | |
|---|---|
| Gekapseltes Klebstoffsystem | 2,75-kN Bruchkraft |
| Vergleichsproben Weißleim | 3,02 kN Bruchkraft |

Die Bruchkraft des gekapselten Klebstoffsystems ist mit jenem von Weißleim vergleichbar, obwohl hier noch keine Optimierung für eine Holzoberfläche vorliegt.

### Beispiel 2:

Das Beispiel 2 umfaßt eine Verklebung von Paneelen eines Laminatfußbodens entsprechend den Fig. 1, 2, 4 und 5. Herkömmliche Paneelen aus einer Trägerplatte, die aus einer hochdichten Faserplatte (HDF) besteht, mit einem konventionellen Nut-Feder-Profil wurden mit einem gekapselten System wie aus Beispiel 1 bestrichen.

Bei der Serie 1 erfolgte der Kleberauftrag über die gesamte Profilfläche der Nuten und der Federn, bei der Serie 2 erfolgte der Kleberauftrag auf denen zur Bodenoberfläche parallelen Seiten, also der oberen und unteren Nutinnenseite bzw. auf der oberen und unteren Federseite. Es erfolgte kein Kleberauftrag auf den zu den Oberseiten senkrechten Flächen der Profilierung. Die so behandelten Paneelen wurden mit einem Heißlufttrockner angetrocknet und dann über mehrere Tage gelagert.

Als Vergleichsmuster wurden Paneelen wie vom Hersteller empfohlen auf der Federoberseite mit Weißleim der Type D3 bestrichen und im Anschluss die beiden korrespondieren Paneelenseiten zusammengefügt. Der oben herausquellende Leim wurde nach 4 Stunden vorsichtig mit einem Stemmeisen entfernt. Die Prüfung dieser Paneelen erfolgte nach 5 Stunden Trocknungszeit.

Die Paneelen der Serie 1 und 2 wurden ca. 15 Minuten vor der Prüfung zusammengeschoben und im zusammengeschobenen Zustand mehrmals leicht in Richtung der Fuge für wenige Millimeter hin und her bewegt.

Vor der Prüfung wurden Streifen senkrecht zur Klebefuge von einer Breite von 5 cm geschnitten. Die Zugprüfung erfolgte auf einer Universalprüfmaschine. Die ermittelte maximale Zugkraft war wie folgt (Mittelwert aus jeweils 10 Proben)

| | |
|---|---|
| Serie 1 | 1,04 kN/5 cm |
| Serie 2 | 1,24 kN/5cm |
| Vergleichsmuster | 0,36 kN/5cm |

Als Richtwert für die Zugfestigkeit gilt eine Zugfestigkeit ca. 1 kN. Die Muster der Serie 1 und 2 erreichen diesen Wert, das Vergleichsmuster liegt weit darunter. Die Abbindezeit von 5 Stunden ist in keiner Weise ausreichend - man erkennt hier eindeutig den Vorteil des gekapselten Systems für die Verlegung von Fußbodenpaneelen.

### Beispiel 3:

Spanplattenstreifen und Eichenholzstreifen (quercus rubra) von jeweils 5 cm Breite und 10 cm Länge wurden mittig auf einer Fläche von 5x5cm² mit dem Bindemittel aus Beispiel 1 bestrichen. Nach dem Abtrocknen mit einem Heißlufttrockner wurden die Proben für mehrere Tage gelagert.

15 Minuten vor der Prüfung wurden jeweils ein Spanplattenstreifen und ein Eichenholzstreifen unter leichtem Druck und mehrmaligem Hin- und Herbewegen der gefügten Teile für wenige Millimeter zusammengefügt, siehe Fig. 10. Es erfolgte keine äußere Druckeinwirkung auf die Klebefuge, z.B. mittels Zwingen oder ähnlichem.

Die Prüfung wurde senkrecht zur Klebefuge durchgeführt. Der Mittelwert aus 7 Prüfungen beträgt 1,05 N/mm² - teilweise wurden Späne aus der Deckschicht der Spanplatte mitgerissen.

### Beispiel 4:

Eine Verbindung von Holz mit Metallen bzw. Kunststoffen ist ebenso möglich. In Analogie zu Beispiel 1 wurden Streifen aus Buchenholz (fagus silvatica) mit Metallstreifen mit 8mm Stärke und mit einem HPL-Schichtpressstoff (HPL - high pressure laminate) mit einer Stärke von 1 mm verklebt. Dazu wurden Buchenholzstreifen wie in Beispiel 1 vorbereitet. Die Metallstreifen bestanden zum einen aus herkömmlichem Aluminium und zum anderen aus Eisen.

Nach erfolgter Lagerung von mehreren Tagen wurden die Buchenholzstreifen unter leichter Druckeinwirkung mit den Metallstreifen zusammengefügt. Die Metalloberfläche wurde vor dem Fügen leicht angeschliffen und im Anschluss gereinigt und entfettet. Nach einer Härtungszeit von 15 Minuten erfolgte eine Zugprüfung wie in Beispiel 1 beschrieben.

Die Ergebnisse waren wie folgt: (Mittelwert aus jeweils 5 Proben, Prüffläche 2x3cm²):

| | |
|---|---|
| Eisen | 1,82 kN Bruchkraft |
| Aluminium | 1,54 kN Bruchkraft |
| Schichtpressstoff | 2,38 kN Bruchkraft |

### Beispiel 5:

Beispiel 5 beschreibt die Verbindung von PVC-Bodenplatten. Zwei Platten der Stärke 1,8 mm wurden an jeweils einer Seite mit einem Winkel von 20° gegengleich angeschrägt, dieses wird auch Schäften bezeichnet. Die beiden schrägen Flächen wurden mit dem Kleber aus Beispiel 1 bestrichen, in bekannter weise abgetrocknet und für mehrere Tage gelagert.

Die geschäfteten Teile wurden dann in derselben Ebene liegend übereinander geschoben und leichter Druck auf die Überlappung ausgeübt. Nach 15 Minuten wurden Zugprüfungen durchgeführt, siehe Fig. 11.

Aus den zusammengefügten Platten wurden Streifen senkrecht zur Klebefuge mit 5 cm Breite geschnitten und diese in analoger Weise wie unter Beispiel 2 erläutert auf Zug geprüft. Die ermittelte maximale Zugkraft betrug 0,25kN/5cm (Mittelwert aus 5 Proben).

## Patentansprüche

1. Bauteil
- mit mindestens einer Fügefläche für eine Verbindung mit weiteren Bauteilen (2, 4),
- wobei eine Matrix (14,16) auf mindestens einer der Fügeflächen (6,8) zumindest abschnittsweise angeordnet ist,
- wobei die Matrix (14,16) zumindest teilweise verfestigt ist und aus einem Klebstoff, Harz oder Wachs besteht,
- wobei eine Vielzahl von Kapseln (18) in der Matrix (14) verteilt angeordnet ist,
- wobei in den Kapseln (18) ein Stoff eines Reaktionsklebstoffsystems enthalten ist und
- wobei zumindest ein Teil der Kapseln (18) den in ihnen enthaltenen Stoff unter äußerer Einwirkung zumindest teilweise freisetzen,
**dadurch gekennzeichnet,**
- **dass** die Matrix (14,16) mindestens zwei Matrixschichten (14, 14',14'') aufweist,
- dass mindestens eine Matrixschicht die Kapseln (18) aufweist und
- **dass** mindestens eine weitere Matrixschicht keine Kapseln aufweist.

2. Bauteil nach Anspruch 1,
**dadurch gekennzeichnet,**
**dass** der Stoff in den Kapseln (18) unter Krafteinwirkung, insbesondere durch Druck und/oder Reibung, den Stoff zumindest teilweise freisetzbar ist.

3. Bauteil nach Anspruch 1,
**dadurch gekennzeichnet,**
**dass** der Stoff in den Kapseln (18) unter Einwirkung äußerer Energie, insbesondere Wärmeenergie, Ultraschallenergie, Hochfrequenzenergie, Lichtenergie oder UV-Energie zumindest teilweise freisetzbar ist.

4. Bauteil nach Anspruch 1,
**dadurch gekennzeichnet,**
**dass** der Stoff in den Kapseln (18) unter Einwirkung einer Flüssigkeit, insbesondere Wasser, zumindest teilweise freisetzbar ist.

5. Bauteil nach einem der Ansprüche 1 bis 4,
**dadurch gekennzeichnet,**
**dass** die Matrix (14,16) eine Versiegelung der Fügefläche bewirkt, insbesondere gegenüber dem Eindringen von Feuchtigkeit.

6. Bauteil nach einem der Ansprüche 1 bis 5,
**dadurch gekennzeichnet,**
**dass** der Reaktionsklebstoff aus mindestens zwei Komponenten besteht, dass die Kapseln (18) eine erste Komponente des Reaktionsklebstoffes enthalten und dass Wasser die zweite Komponente darstellt.

7. Bauteil nach einem der Ansprüche 1 bis 5,
**dadurch gekennzeichnet,**
**dass** der Reaktionsklebstoff aus mindestens zwei Komponenten besteht, dass die Kapseln (18) mindestens einen ersten Stoff des Reaktionsklebstoffsystems enthalten und dass die Matrix (14,16) zumindest teilweise einen zweiten Stoff des Reaktionsklebstoffsystems aufweist.

8. Bauteil nach Anspruch 7,
**dadurch gekennzeichnet,**
**dass** die Kapseln (18) und/oder die Matrix (14,16) mindestens einen weiteren Stoff des Reaktionsklebstoffsystems aufweisen.

9. Bauteil nach Anspruch 7 oder 8,
**dadurch gekennzeichnet,**
**dass** mindestens zwei verschiedene Sorten von Kapseln (18) mit darin enthaltenen unterschiedlichen Stoffen des Reaktionsklebstoffsystems vorgesehen sind.

10. Bauteil nach Anspruch 1 bis 9,
**dadurch gekennzeichnet,**
**dass** verschiedene Matrixschichten (14',14'') unterschiedliche Stoffe des Reaktionsklebstoffsystems aufweisen.

11. Bauteil nach Anspruch 1 bis 10,
**dadurch gekennzeichnet,**
**dass** verschiedene Schichten von Kapseln (18',18'') unterschiedliche Komponenten des Reaktionsklebstoffes aufweisen.

12. Bauteil nach einem der Ansprüche 1 bis 11,
**dadurch gekennzeichnet,**
**dass** die Fügeflächen (6) für ein stumpfes Aneinandergrenzen mit einer Fügefläche (8) eines weiteren Bauteils (4) ausgebildet ist.

13. Bauteil nach einem der Ansprüche 1 bis 11,
**dadurch gekennzeichnet**,
das die Fügefläche (6,8) als Teil einer Nut-Feder-Verbindung ausgebildet ist.

14. Bauteil nach einem der Ansprüche 1 bis 13,
**dadurch gekennzeichnet,**
**dass** das Bauteil (2,4) aus einem zellulosehaltigen Material, vorzugsweise aus Holz oder aus einem Holzwerkstoff besteht.

15. Bauteil nach einem der Ansprüche 1 bis 14,
**dadurch gekennzeichnet,**
**dass** das Bauteil Bestandteil eines Möbels ist und dass beim Zusammenfügen der Fügeflächen des Bauteils mit mindestens einem weiteren Bauteil eine feste Verbindung entsteht.

16. Bauteil nach Anspruch 15,
**dadurch gekennzeichnet,**
**dass** das Bauteil ein Möbelteil ist und dass das andere Bauteil ein Verbindungsmittel, insbesondere Dübel, Schraube oder Scharnier ist.

17. Verfahren zum Herstellen eines Bauteils (2,4) gemäß einem der Ansprüche 1 bis 16,
- bei dem mit Hilfe eines Auftragssystems eine Matrixschicht aufgebracht wird,
- bei dem eine zweite Matrixschicht gebildet wird, die Kapseln (18) aufweist, und
- bei dem die so erhaltenen Matrixschichten (14,14',14") zumindest teilweise verfestigt werden.

18. Verfahren nach Anspruch 17,
- bei dem die Kapseln vor dem Auftragen in dem Matrixmaterial dispergiert werden,
- bei dem mit Hilfe des Auftragssystems die zweite Matrixschicht aus dem Matrixmaterial auf die erste Matrixschicht aufgetragen wird, und
- bei dem die so erhaltenen Matrixschichten zumindest teilweise verfestigt werden.

19. Verfahren nach Anspruch 17,
- bei dem mit Hilfe des Auftragssystems mindestens eine Matrixschicht aus Matrixmaterial auf zumindest einen Teil der Fügefläche (6,8) aufgetragen wird,
- bei dem auf die noch nicht vollständig verfestigte Matrixschicht die Kapseln (18) aufgebracht werden und
- bei dem die so erhaltene Matrixschicht zumindest teilweise verfestigt wird.

20. Verfahren nach einem der Ansprüche 17 bis 19,
- bei dem das Matrixmaterial zumindest teilweise aus einem gelösten Klebstoff besteht und
- bei dem die Matrixschicht durch eine Trocknung zumindest teilweise verfestigt wird.

21. Verfahren nach Anspruch 17,
- bei dem mit Hilfe des Auftragssystems die zweite Matrixschicht aus mit Matrixmaterial zumindest teilweise ummantelten Kapseln (18) aufgebracht wird und
- bei dem die so erhaltene Matrixschicht zumindest teilweise verfestigt wird.

22. Verfahren nach Anspruch 21,
- bei dem das Matrixmaterial zumindest teilweise aus einem Schmelzkleber besteht und
- bei dem nach dem Auftragen der ummantelten Kapseln der Schmelzklebstoff durch Erwärmen zumindest teilweise angeschmolzen und nachfolgend durch Abkühlen wieder verfestigt wird.

23. Verfahren nach einem der Ansprüche 17 bis 22,
bei dem die Matrixschicht mittels Sprühen, Streichen, Walzen, Gießen, Streuen oder Spachteln aufgetragen wird.

24. Verfahren nach einem der Ansprüche 19 bis 23,
bei dem die Kapseln (18) mittels eines gerichteten Luftstrahls oder mittels elektrostatischer Aufladung aufgebracht werden.

25. Verfahren nach einem der Ansprüche 19 bis 23,
bei dem ein Strom von nach unten rieselnden Kapseln (18) erzeugt wird und bei dem die Fügefläche durch diesen Strom hindurchgeführt wird.

26. Verfahren nach einem der Ansprüche 19 oder 25,
bei dem während des Auftragens der Kapseln (18) überschüssige Kapseln abgesaugt werden.

27. Verfahren nach Anspruch 26,
bei dem die abgesaugten Kapseln (18) dem Vorrat an Kapseln (18) wieder zugeführt werden.

28. Verfahren nach einem der Ansprüche 19 bis 27,
bei dem nach dem Auftragen der mindestens einen Kapselschicht eine weitere Matrixschicht aufgetragen wird.

29. Verfahren nach Anspruch 28,
bei dem ein mehrlagiger Schichtaufbau durch mehrfaches Auftragen von Matrixschichten und Kapselschichten hergestellt wird.

## Claims

1. A component
- having at least one joint face for a connection to further components (2, 4),
- a matrix (14, 16) being situated on at least some sections of at least one of the joint faces (6, 8),
- the matrix (14, 16) being at least partially hardened and comprising an adhesive, resin, or wax,
- multiple capsules (18) being positioned distributed in the matrix (14),
- a material of a reaction adhesive system being contained in the capsules (18), and
- at least a part of the capsules (18) at least partially releasing the material contained therein under external action,
**characterized in that**
- the matrix (14, 16) has at least two matrix layers (14, 14', 14"),
- at least one matrix layer has the capsules (18),
- at least one further matrix layer has no capsules.

2. The component according to Claim 1,
**characterized in that** the material in the capsules (18) may be at least partially released under the effect of force, particularly through pressure and/or friction.

3. The component according to Claim 1,
**characterized in that** the material in the capsules (18) is at least partially released while under the effect of external energy, particularly thermal energy, ultrasonic energy, high-frequency energy, light energy, or UV energy.

4. The component according to Claim 1,
**characterized in that** the material in the capsules (18) may be at least partially released under the effect of a liquid, particularly water.

5. The component according to one of Claims 1 through 4,
**characterized in that** the matrix (14, 16) causes sealing of the joint face, particularly against the penetration of moisture.

6. The component according to one of Claims 1 through 5,
**characterized in that** the reaction adhesive comprises at least two components, the capsules (18) contain a first component of the reaction adhesive, and water represents the second component.

7. The component according to one of Claims 1 through 5,
**characterized in that** the reaction adhesive comprises at least two components, the capsules (18) contain a first material of the reaction adhesive system, and the matrix (14, 16) at least partially has a second material of the reaction adhesive system.

8. The component according to Claim 7,
**characterized in that** the capsules (18) and/or the matrix (14, 16) have at least one further material of the reaction adhesive system.

9. The component according to Claim 7 or 8,
**characterized in that** at least two different types of capsules (18) are provided, having different materials of the reaction adhesive material contained therein.

10. The component according Claims 1 through 9,
**characterized in that** different matrix layers (14', 14") have different materials of the reaction adhesive system.

11. The component according to Claims 1 through 10,
**characterized in that** different layers of capsules (18', 18") have different components of the reaction adhesive.

12. The component according to one of Claims 1 through 11,
**characterized in that** the joint faces (6) are implemented for a butt-joint with a joint face (8) of a further component (4).

13. The component according to one of Claims 1 through 11,
**characterized in that** the joint face (6, 8) is implemented as a part of a tongue and groove joint.

14. The component according to one of Claims 1 through 13,
**characterized in that** the component (2, 4) is made of a cellulose-containing material, preferably wood or a wood material.

15. The component according to one of Claims 1 through 14,
**characterized in that** the component is part of a piece of furniture and a solid connection results when the joint faces of the component are joined with at least one further component.

16. The component according to Claim 15,
**characterized in that** the component is a furniture part and the other component is a connection means, particularly a dowel, screw, or hinge.

17. A method for manufacturing a component (2, 4) according to one of Claims 1 through 16,
- wherein a matrix layer is applied with the aid of an application system,
- a second matrix layer is formed which has the capsules (18), and
- the matrix layers (14, 14', 14") thus obtained are at least partially hardened.

18. The method according to Claim 17,
- wherein the capsules are dispersed in the matrix material before the application,
- the second matrix layer made of the matrix material is applied to the first matrix layer with the aid of the application system, and
- the matrix layers thus obtained are at least partially hardened.

19. The method according to Claim 17,
- wherein at least one matrix layer made of matrix material is applied to at least one part of the joint face (6, 8) with the aid of the application system,
- the capsules (18) are applied to the matrix layer, which is not yet completely hardened, and
- the matrix layer thus obtained is at least partially hardened.

20. A method according to one of Claim 17 through 19,
- wherein the matrix material at least partially comprises a dissolved adhesive and
- the matrix layer is at least partially hardened through drying.

21. The method according to Claim 17,
- wherein the second matrix layer, made of capsules (18) at least partially enveloped with matrix material, is applied with aid of the application system and
- the matrix layer thus obtained is at least partially hardened.

22. The method according to Claim 21,
- wherein the matrix material at least partially comprises a hot-melt adhesive and
- after the enveloped capsules are applied, the hot-melt adhesive is at least partially melted through heating and subsequently hardened again through cooling.

23. The method according to one of Claims 17 through 22,
wherein the matrix layer is applied using spraying, painting, rolling, pouring, scattering, or scraping.

24. The method according to one of Claims 19 through 23,
wherein the capsules (18) are applied using a directed air stream or using electrostatic charge.

25. The method according to one of Claims 19 through 23,
wherein a stream of capsules (18) flowing downward is produced and the joint face is guided through this stream.

26. The method according to one of Claims 19 or 25,
wherein excess capsules are suctioned off as the capsules (18) are applied.

27. The method according to Claim 26,
wherein the capsules (18) suctioned off are returned to the supply of capsules (18).

28. The method according to one of Claims 19 through 27,
wherein a further matrix layer is applied after the application of the at least one capsule layer.

29. The method according to Claim 28,
wherein a multilayered layer construction is manufactured through multiple applications of matrix layers and capsule layers.

## Revendications

1. Composant
- comportant au moins une surface d'assemblage permettant une liaison avec d'autres composants (2,4),
- dans lequel une matrice (14,16) est disposée au moins section par section sur au moins une des surfaces d'assemblage (6,8),
- dans lequel la matrice (14,16) est solidifiée au moins partiellement et est constituée d'une colle, résine ou cire,
- dans lequel une pluralité de capsules (18) est répartie dans la matrice (14),
- dans lequel les capsules (18) contiennent une substance d'un système de colle de mélange et
- dans lequel au moins une partie des capsules (18) libèrent au moins partiellement la substance qu'elles contiennent sous l'effet d'une action extérieure,
**caractérisé en ce que**,
- la matrice (14,16) présente au moins deux couches de matrice (14,14',14''),
- au moins une couche de matrice présente les capsules (18) et
- au moins une autre couche de matrice ne présente aucune capsule.

2. Composant selon la revendication 1,
**caractérisé en ce que**,
la substance contenue dans les capsules (18) peut être libérée au moins partiellement par l'action d'une force, notamment par la pression et/ou la friction.

3. Composant selon la revendication 1,
**caractérisé en ce que**,
la substance contenue dans les capsules (18) peut être libérée au moins partiellement sous l'effet d'une énergie extérieure, notamment une énergie thermique, énergie d'ultrasons, énergie à haute fréquence, énergie lumineuse ou énergie d'UV.

4. Composant selon la revendication 1,
**caractérisé en ce que**,
la substance contenue dans les capsules (18) peut être libérée au moins partiellement par l'action d'un liquide, notamment de l'eau.

5. Composant selon une des revendications 1 à 4,
**caractérisé en ce que**,
la matrice (14,16) provoque une étanchéisation de la surface d'assemblage, notamment contre les infiltrations d'humidité.

6. Composant selon une des revendications 1 à 5,
**caractérisé en ce que**,
la colle de mélange est constituée d'au moins deux composants, les capsules (18) contiennent un premier composant de la colle de mélange et le deuxième composant est de l'eau.

7. Composant selon une des revendications 1 à 5,
**caractérisé en ce que**,
la colle de mélange est constituée d'au moins deux composants, les capsules (18) contiennent au moins une première substance de la colle de mélange et la matrice (14,16) présente au moins une deuxième substance du système de colle de mélange.

8. Composant selon la revendication 7,
**caractérisé en ce que**,
les capsules (18) et/ou la matrice (14,16) présentent au moins une deuxième substance du système de colle de mélange.

9. Composant selon la revendication 7 ou 8,
**caractérisé en ce que**,
au moins deux types différents de capsules (18) ainsi que les substances différentes du système de colle de mélange qu'elles contiennent sont prévues.

10. Composant selon les revendications 1 à 9,
**caractérisé en ce que**,
des couches de matrice (14',14'') différentes présentent des substances différentes du système de colle de mélange.

11. Composant selon les revendications 1 à 10,
**caractérisé en ce que**,
des couches différentes des capsules (18',18'') présentent des composants différents de la colle de mélange.

12. Composant selon une des revendications 1 à 11,
**caractérisé en ce que**,
les surfaces d'assemblage (6) sont configurées en vue d'une contiguïté bord à bord avec une surface d'assemblage (8) d'un autre composant (4).

13. Composant selon une des revendications 1 à 11,
**caractérisé en ce que**,
la surface d'assemblage (6,8) est configurée comme une partie d'une liaison rainure-ressort.

14. Composant selon une des revendications 1 à 13,
**caractérisé en ce que**,
le composant (2,4) est constitué d'un matériau contenant de la cellulose, de préférence du bois ou une autre matière à base de bois.

15. Composant selon une des revendications 1 à 14,
**caractérisé en** e que,
le composant est partie intégrante d'un meuble et une liaison solide est obtenue lors de l'assemblage des surfaces d'assemblage du composant avec au moins un autre composant.

16. Composant selon la revendication 15,
**caractérisé en ce que**,
le composant est une partie de meuble et l'autre composant est un moyen de liaison, notamment une cheville, une vis ou une charnière.

17. Procédé de fabrication d'un composant (2,4) selon une des revendications 1 à 16,
- dans lequel une couche de matrice est déposée à l'aide d'un système d'application,
- dans lequel une deuxième couche de matrice est formée, laquelle présente des capsules (18), et
- dans lequel les couches de matrice (14,14',14'') ainsi obtenues sont solidifiées au moins partiellement.

18. Procédé selon la revendication 17,
- dans lequel les capsules sont dispersées dans le matériau de matrice avant l'application,
- dans lequel, à l'aide du système d'application, la deuxième couche de matrice du matériau de matrice est appliquée sur la première couche de matrice et
- dans lequel les couches de matrice ainsi obtenues sont solidifiées au moins partiellement.

19. Procédé selon la revendication 17,
- dans lequel, à l'aide du système d'application, au moins une couche de matrice du matériau de matrice est appliquée sur au moins une partie de la surface d'assemblage (6,8),
- dans lequel les capsules (18) sont déposées sur la couche de matrice qui n'est pas encore totalement solidifiée et
- dans lequel la couche de matrice ainsi obtenue est au moins partiellement solidifiée.

20. Procédé selon une des revendications 17 à 19,
- dans lequel le matériau de matrice est constitué au moins partiellement d'une colle dissoute et
- dans lequel la couche de matrice est solidifiée au moins partiellement par un séchage.

21. Procédé selon la revendication 17,
- dans lequel, à l'aide du système d'application, des capsules (18) au moins partiellement enrobées du matériau de matrice sont appliquées sur la deuxième couche de matrice et
- dans lequel la couche de matrice ainsi obtenue est au moins partiellement solidifiée.

22. Procédé selon la revendication 21,
- dans lequel le matériau de matrice est constitué au moins partiellement d'une colle thermofusible et
- dans lequel, après l'application des capsules enrobées, la colle thermofusible est fondue au moins partiellement par réchauffement et, par la suite, à nouveau partiellement solidifiée par refroidissement.

23. Procédé selon une des revendications 17 à 22,
dans lequel la couche de matrice est appliquée au moyen d'une vaporisation, d'un enduit, d'un laminage, d'un coulage, d'un saupoudrage ou d'un masticage.

24. Procédé selon une des revendications 19 à 23,
dans lequel les capsules (18) sont déposées au moyen d'un jet d'air orienté ou au moyen d'une charge électrostatique.

25. Procédé selon une des revendications 19 à 23,
dans lequel un courant de capsules (18) ruisselantes vers le bas est produit et dans lequel la surface d'assemblage est traversée par ce courant.

26. Procédé selon une des revendications 19 ou 25,
dans lequel, pendant l'application des capsules (18), des capsules excédentaires sont aspirées.

27. Procédé selon la revendication 26,
dans lequel les capsules (18) aspirées sont réintroduites dans le stock de capsules (18).

28. Procédé selon une des revendications 19 à 27,
dans lequel, après l'application d'au moins une couche de matrice, une autre couche de matrice est appliquée.

29. Procédé selon la revendication 28,
dans lequel une structure de couches à plusieurs couches est produite par application répétée de couches de matrice et de couches de capsules.
